(19) Europäisches Patentamt
European Patent Office
Office européen des brevets

(11) **EP 1 852 226 B1**

(12) **FASCICULE DE BREVET EUROPEEN**

(45) Date de publication et mention de la délivrance du brevet:
**29.11.2017 Bulletin 2017/48**

(51) Int Cl.:
***B25J 9/16*** (2006.01)

(21) Numéro de dépôt: **07356056.7**

(22) Date de dépôt: **26.04.2007**

(54) **Procédé et dispositif de réglage de paramètres de fonctionnement d'un robot, programme et support d'enregistrement pour ce procédé**

Verfahren und Vorrichtung zur Einstellung von Betriebsparametern eines Roboters, Programm und Aufzeichnungsdatenträger für dieses Verfahren

Method and device for adjusting the operating parameters of a robot, program and storage medium for this method

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.04.2006 FR 0603855**

(43) Date de publication de la demande:
**07.11.2007 Bulletin 2007/45**

(73) Titulaire: **STAUBLI FAVERGES**
**74210 FAVERGES (FR)**

(72) Inventeurs:
• **Joly, Luc**
**74210 Faverges (FR)**
• **Guilbert, Matthieu**
**38400 Saint Marcellin d'Heres (FR)**
• **Wieber, Pierre-Brice**
**38000 Grenoble (FR)**

(74) Mandataire: **Lavoix**
**62, rue de Bonnel**
**69448 Lyon Cedex 03 (FR)**

(56) Documents cités:
WO-A-02/074501    US-A- 5 889 926
US-B1- 6 604 005

## Description

L'invention concerne un procédé et un dispositif de réglage de paramètres de fonctionnement d'un robot, un programme et un support d'enregistrement pour ce procédé.

Il existe des procédés de réglage de paramètres de fonctionnement d'un robot pour déplacer un outil effecteur le long d'une trajectoire donnée en un temps de cycle optimal.

Lorsqu'il s'agit de minimiser le temps de cycle, ces procédés sont connus sous le terme de « commande à temps de cycle minimum » (« minimum time control » en anglais). Le document US 5 889 926 A divulgue un tel état de la technique. Le temps de cycle est le temps nécessaire au robot pour faire parcourir à l'outil effecteur une trajectoire donnée complète d'un point de départ jusqu'à un point d'arrivée en passant par des points intermédiaires de passage. Généralement, le robot réitère plusieurs fois le même mouvement de sorte que la trajectoire forme un circuit fermé où le point de départ et le point d'arrivée sont confondus.

Les paramètres de fonctionnement du robot déterminent la précision avec laquelle l'outil effecteur se déplace le long de la trajectoire donnée ainsi que la vitesse et l'accélération de l'outil effecteur le long de cette trajectoire. Plus précisément, les paramètres de fonctionnement sont utilisables par une unité électronique de commande du robot qui, à partir des paramètres de fonctionnement et de points de passage sur la trajectoire donnée, est capable de commander des actionneurs électriques du robot pour que celui-ci déplace l'outil effecteur le long de la trajectoire donnée. Les paramètres de fonctionnement sont, par exemple, une accélération maximale, une décélération maximale, une vitesse maximale tolérée sur une portion de la trajectoire donnée, ou la durée requise pour parcourir une portion de trajectoire.

Les paramètres de fonctionnement d'un robot sont très nombreux. De plus, les relations entre ces paramètres de fonctionnement et des contraintes de fonctionnement intégrables sont souvent très complexes.

Par contraintes de fonctionnement intégrables, on désigne ici des valeurs limites pour des grandeurs physiques intégrables des actionneurs du robot. La valeur de chaque grandeur physique intégrable est le résultat d'une intégration de la valeur instantanée d'autres grandeurs physiques sur la trajectoire complète. En d'autres termes, la valeur de ces grandeurs physiques intégrables est calculée par intégration de la valeur instantanée d'une ou plusieurs autres grandeurs physiques du robot entre le point de départ et le point d'arrivée de la trajectoire donnée.

De telles grandeurs physiques intégrables sont par exemple des températures de fonctionnement d'un actionneur, d'un lubrifiant, d'un joint, de composants électroniques embarqués (codeurs, ...) ... etc. Le degré d'usure des roulements à billes des transmissions est également une grandeur physique intégrable. La température de fonctionnement et le degré d'usure sont fonction de l'intégration sur la totalité de la trajectoire des valeurs instantanées d'autres grandeurs physiques tels que la vitesse de rotation ou le courant d'alimentation d'un actionneur.

Dans la suite de cette description, chaque paramètre de fonctionnement est noté $p_j$ où l'indice j est un identifiant du paramètre de fonctionnement. On définit également un vecteur $\vec{P}$ de paramètres de fonctionnement par la relation suivante:

$$\vec{P} = (p_1 ; p_2 ; ... ; p_j ; ... ; p_m)^{T}$$

où:

- $T$ est la fonction de transposition, et
- $m$ est le nombre de paramètres de fonctionnement.

Il existe des procédés de commande tenant compte de limites de température des actionneurs du robot pour régler les paramètres de fonctionnement permettant d'atteindre un temps de cycle minimum (voir par exemple WO 02/074501). Les limites de température de chaque actionneur sont, par exemple, définies à partir de données fournies par le constructeur des actionneurs.

Ces procédés existants comportent, à partir de mesures réalisées lors d'un déplacement réel de l'outil effecteur et/ou à partir de relevés délivrés par un émulateur de déplacement du robot, les étapes suivantes:

    a) une étape de détermination de la valeur du temps de cycle en fonction des valeurs des paramètres de fonctionnement,
    b) une étape de détermination de la valeur d'une température de fonctionnement suite au parcours complet de la trajectoire, et
    c) une étape de modification des valeurs des paramètres de fonctionnement pour rapprocher le temps de cycle de sa valeur optimale.

Les étapes a) à c) sont réitérées tant que le temps de cycle peut encore être minimisé sans que la température de fonctionnement ne dépasse sa valeur limite.

Typiquement, le temps de cycle et les températures de fonctionnement varient en sens opposé. Ainsi, plus le temps de cycle diminue et plus la température de fonctionnement de chaque actionneur s'élève. Dès lors, le temps de cycle minimal est atteint lorsque au moins l'une des températures de fonctionnement est égale à sa valeur limite. Les procédés existants conduisent donc systématiquement à faire fonctionner le robot avec une température de fonctionnement égale à sa valeur limite. Ceci n'est pas souhaitable dans toutes les situations. Par exemple, les situations suivantes peuvent être préférées:

1) régler les paramètres de fonctionnement pour obtenir un temps de cycle légèrement supérieur au temps de cycle obtenu à l'aide des procédés existants mais pour des températures de fonctionnement nettement inférieures à leurs valeurs limite ; et

2) régler les paramètres de fonctionnement pour obtenir un temps de cycle nettement inférieur à celui obtenu à l'aide des procédés existants quitte à fonctionner avec une température de fonctionnement légèrement supérieure à sa valeur limite.

L'invention vise à proposer un procédé de réglage des paramètres de fonctionnement d'un robot permettant d'obtenir la situation 1) ou 2) ci-dessus.

L'invention a donc pour objet un procédé de réglage des paramètres de fonctionnement d'un robot dans lequel lors de l'étape c) les valeurs des paramètres de fonctionnement sont modifiées pour se rapprocher d'un extremum d'une fonction de compromis, la fonction de compromis comprenant au moins des premier et second termes, le premier terme étant fonction du temps de cycle déterminé lors de l'étape a) et le second terme étant fonction de la température et/ou du degré d'usure déterminé lors de l'étape b), et le premier terme varie en sens opposé du second terme ou de la somme des autres termes lorsque le temps de cycle varie.

L'utilisation de cette fonction de compromis permet de se diriger vers un optimum où le gain en terme de temps de cycle est contrebalancé par une augmentation excessive de la température et/ou du degré d'usure du robot. Ainsi, ce procédé permet de dépasser la valeur limite de la température de fonctionnement ou du degré d'usure d'un actionneur lorsque le gain en terme de temps de cycle est important et que le dépassement de la valeur limite reste acceptable. A l'inverse, le procédé ci-dessus permet de rester bien en deçà de chacune des valeurs limites de température ou de degré d'usure si la diminution du temps de cycle est faible par rapport à l'augmentation de la température de fonctionnement ou du degré d'usure.

Ainsi, ce procédé permet d'obtenir un temps de cycle nettement inférieur à celui obtenu avec des procédés existants moyennant un léger dépassement de certaines valeurs limites.

Le procédé ci-dessus permet également d'obtenir un temps de cycle sensiblement égal à celui obtenu à l'aide des procédés existants mais en maintenant la température de fonctionnement ou le degré d'usure à des niveaux nettement inférieurs.

Les modes de réalisation de ce procédé peuvent comporter une ou plusieurs des caractéristiques suivantes:

- la fonction de compromis comporte également un troisième terme fonction du couple instantané exercé par chaque actionneur ;
- la fonction de compromis comporte également un quatrième terme fonction de l'erreur de positionnement de l'outil effecteur par rapport à la trajectoire donnée ;
- au moins l'un des termes comporte un coefficient réglable, et le procédé comporte une étape de réglage de la valeur de ce coefficient par un utilisateur ;
- au moins l'un des termes est fonction de la différence entre les valeurs déterminées lors de l'étape a) ou b) et d'une valeur limite donnée pour cette valeur ;
- lors de l'étape b) le couplage thermique entre plusieurs actionneurs est pris en compte pour déterminer la température de fonctionnement d'au moins l'un de ces actionneurs ;
- lors de l'étape b) une prédiction de la température et/ou du degré d'usure en régime stationnaire est établie à partir de données obtenues suite à un seul parcours de la trajectoire donnée, et la prédiction de la température et/ou du degré d'usure est utilisée pour calculer le gradient de la fonction de compromis,
- une étape de vérification automatique que la fonction de compromis satisfait à un critère d'arrêt prédéterminé, et dans le cas où la fonction de compromis satisfait ce critère d'arrêt, une étape d'arrêt automatique de l'itération des étapes a) à c), et
- l'étape de vérification consiste à vérifier que la norme du gradient de la fonction de compromis par rapport aux paramètres de fonctionnement est inférieure à un seuil prédéterminé.

Ces modes de réalisation présentent en outre les avantages suivants:

- la présence d'un terme fonction du couple exercé par chaque actionneur dans la fonction de compromis permet d'éviter d'obtenir un réglage conduisant à demander à un actionneur de fournir un couple excessif ;
- l'utilisation d'un terme fonction de l'erreur de positionnement dans la fonction de compromis permet d'éviter d'obtenir un réglage des paramètres de fonctionnement conduisant à une imprécision importante de la position de l'outil effecteur par rapport à la trajectoire donnée;
- les coefficients réglables permettent à l'utilisateur de définir l'importance d'un terme par rapport à un autre dans la fonction de compromis et donc d'indiquer une tolérance sur le dépassement des valeurs limites ;
- l'utilisation de la différence par rapport à une valeur limite permet de tenir compte du dépassement de cette valeur limite lors du réglage des paramètres de fonctionnement ;
- la prise en compte des couplages thermiques entre actionneurs permet d'accroître la précision de la détermination de la température de fonctionnement de chaque actionneur ce qui permet un réglage plus précis des paramètres de fonctionnement ;
- l'utilisation d'une prédiction de la température ou du degré d'usure stationnaire à partir d'un seul parcours de la trajectoire rend le procédé de réglage ci-dessus plus rapide ; et
- l'utilisation du gradient de la fonction de compromis dans le critère d'arrêt permet de détecter un extrémum de la fonction de compromis.

L'invention a également pour objet un programme d'ordinateur et un support d'enregistrement d'informations comportant des instructions pour l'exécution du procédé de réglage ci-dessus, lorsque ces instructions sont exécutées par un calculateur électronique.

L'invention a également pour objet un dispositif de réglage des paramètres de fonctionnement d'un robot comportant:

a) un module de détermination de la valeur du temps de cycle en fonction de la valeur des paramètres de fonctionnement, et de détermination de la valeur de température de fonctionnement et/ou de la valeur d'un degré d'usure pour au moins l'un des actionneurs du robot suite au parcours complet de la trajectoire,
b) un module de modification des valeurs des paramètres de fonctionnement pour rapprocher le temps de cycle de sa valeur optimale.

Le module de modification est apte à modifier les valeurs des paramètres de fonctionnement pour se rapprocher d'un extremum d'une fonction de compromis, la fonction de compromis comprenant au moins des premier et second termes, le premier terme étant fonction du temps de cycle et le second terme étant fonction de la température et/ou du degré d'usure déterminé par le module a, le premier terme variant en sens opposé du second terme ou de la somme des autres termes lorsque le temps de cycle varie.

Les modes de réalisation de ce dispositif comportent la caractéristique suivante:

- au moins l'un des termes comporte un coefficient réglable et le dispositif comporte une interface homme/machine permettant à un utilisateur de régler la valeur de ce ou ces coefficients.

L'invention sera mieux comprise à la lecture de la description qui va suivre donnée uniquement à titre d'exemple non limitatif et faite en se référant aux dessins sur lesquels:

- la figure 1 est une illustration schématique de l'architecture d'un dispositif de réglage des paramètres de fonctionnement d'un robot,
- la figure 2 est un organigramme d'un procédé de réglage des paramètres de fonctionnement d'un robot à l'aide du dispositif de la figure 1 ; et
- les figures 3A et 3B sont des graphes représentant respectivement les situations 1) et 2) décrites lors de l'introduction ci-dessus.

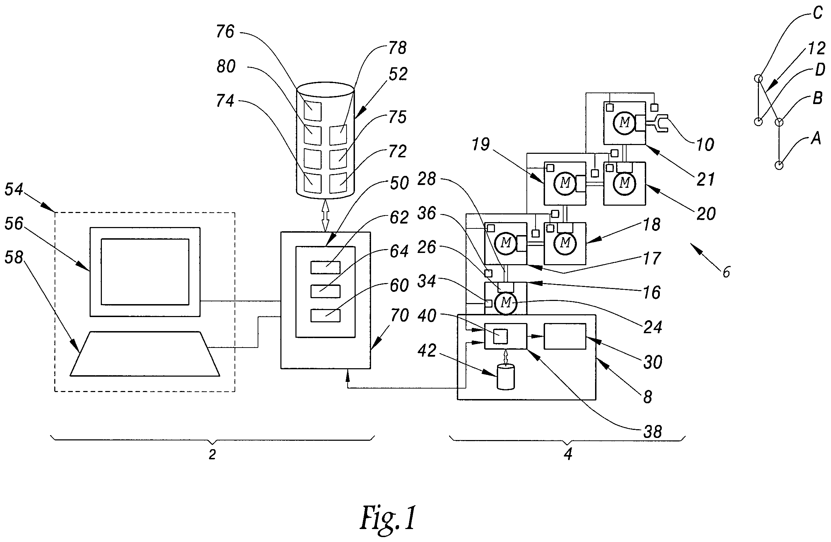

La figure 1 représente un dispositif 2 de réglage des paramètres de fonctionnement d'un robot 4. Le robot 4 est pourvu d'un bras articulé 6 et d'un boîtier 8 de commande.

Le bras 6 comporte à l'une de ses extrémités un outil effecteur 10.

En face de l'outil 10, des points A, B, C, D représentent en perspective une trajectoire 12 que doit suivre l'outil 10 une fois le robot 4 programmé.

A titre d'illustration, le bras 6 est équipé de six actionneurs électriques 16 à 21 pour déplacer sélectivement le bras 6 autour de six articulations. Pour simplifier la description, on suppose ici que les actionneurs électriques 16 à 21 sont tous identiques et seul l'actionneur 16 sera décrit en détail.

L'actionneur 16 comprend par exemple:

- une machine électrique tournante telle qu'un moteur électrique de préférence un moteur électrique triphasé 24, et
- un réducteur 26 de vitesse angulaire mécaniquement accouplé entre un arbre entraîné en rotation par le moteur 24 et un arbre 28 de sortie de l'actionneur 16.

Le réducteur 26 est, par exemple, apte à réduire la vitesse angulaire de l'arbre 28 par rapport à celle de l'arbre du moteur 24 par un coefficient de réduction $\gamma$.

L'arbre 28 permet de déplacer en rotation l'actionneur 17.

Le moteur 24 est alimenté à partir d'une source commandable 30 d'alimentation. Cette source 30 est, par exemple, située dans le boîtier 8. A titre d'exemple, la source 30 est un onduleur commandable raccordé à un réseau de distribution d'électricité continue.

L'actionneur 16 est également équipé d'un capteur 34 de l'intensité $i_1$ du courant d'alimentation du moteur 24 et d'un capteur 36 de la position angulaire de l'arbre 28.

Les capteurs 34 et 36 sont raccordés à une unité de commande 38, par exemple, située à l'intérieur du boîtier 8.

L'unité de commande 38 comporte un générateur 40 de trajectoire propre à déterminer à partir de paramètres de fonctionnement et de coordonnées de points de passages sur la trajectoire 12 la position, la vitesse et l'accélération de l'outil 10 le long de chacune des portions de la trajectoire 12. Par exemple, le générateur 40 est apte à déterminer le profil de vitesse des déplacements de l'outil 10 le long de chacune des portions AB, BC et CD de la trajectoire 12. Le profil de vitesse définit l'évolution de la vitesse de l'effecteur 10 le long de la portion de trajectoire en fonction du temps.

A titre d'exemple, pour le robot 4, le vecteur $\vec{P}$ de paramètres de fonctionnement est défini par la relation suivante:

$$\vec{P} = [p_1, p_2, p_3, ..., p_i, ..., p_9]^T$$

où :

- $p_1$, $p_4$ et $p_6$ sont les accélérations maximales tolérées sur les portions de la trajectoire 12 respectivement comprises entre les points A et B, B et C, et C et D,
- $p_2$, $p_5$ et $p_8$ sont les vitesses maximales tolérées sur les portions de trajectoire respectivement comprises entre les points A et B, B et C et C et D, et
- $p_3$, $p_6$ et $p_9$ sont les décélérations maximales tolérées sur les portions de trajectoire respectivement comprises entre les points A et B, B et C et C et D.

L'unité 38 est apte à commander la source 30 d'alimentation de chacun des actionneurs de manière à ce que l'effecteur 10 se déplace le long de la trajectoire 12 avec les vitesses définies par le générateur 40.

L'unité 38 est associée à des moyens de stockage d'informations telle qu'une mémoire 42. Cette mémoire 42 contient notamment les coordonnées des points de passage de la trajectoire 12. Par exemple, ici, la mémoire 42 contient les coordonnées dans l'espace des points A, B, C et D.

L'unité 38 est également raccordée au dispositif 2 pour recevoir les paramètres de fonctionnement et pour lui transmettre les valeurs mesurées par les capteurs 34 et 36 de chacun des actionneurs.

Le dispositif 2 est équipé:

- d'une unité 50 d'élaboration des paramètres de fonctionnement du robot 4,
- de moyens de stockage d'informations tels qu'une mémoire 52 contenant les données utilisées par l'unité 50, et
- d'une interface homme/machine 54 permettant à l'unité 50 d'acquérir des données saisies par l'utilisateur du dispositif 2.

L'interface 54 comprend par exemple un écran 56 d'affichage et un clavier 58 raccordé à l'unité 50.

L'unité 50 comprend:

- un module 60 d'acquisition de coefficients saisis par un utilisateur à l'aide de l'interface 54,
- un module 62 de détermination du temps de cycle, de la température de fonctionnement stationnaire de chacun des actionneurs et du degré d'usure de chacun des actionneurs, et
- un module 64 de modification des paramètres de fonctionnement afin de se rapprocher d'un extremum d'une fonction de compromis.

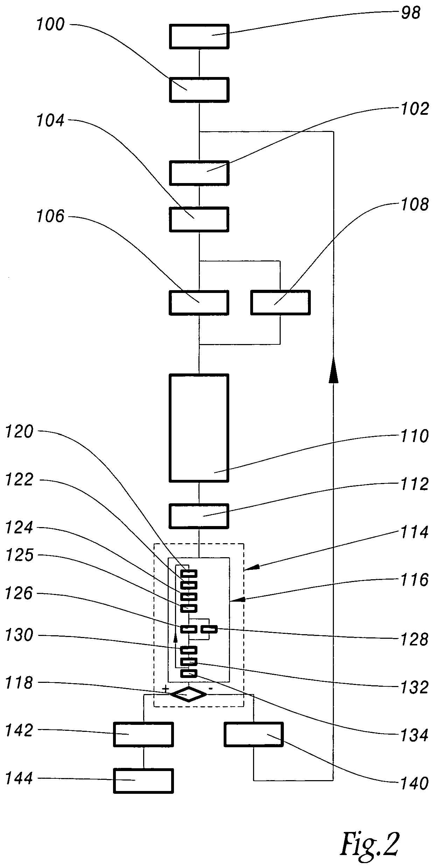

Les différentes fonctionnalités de l'unité 50 et des modules 60, 62 et 64 apparaîtront à la lecture de la description faite en regard de la figure 2.

L'unité 50 est ici réalisée à partir d'un calculateur électronique programmable 70 apte à exécuter un programme enregistré sur un support d'enregistrement d'informations. A cet effet, la mémoire 52 comporte des instructions de programme pour l'exécution du procédé de la figure 2 lorsque ces instructions sont exécutées par le calculateur 70.

La mémoire 52 contient un modèle 72 d'échauffement de chacun des actionneurs, un modèle 74 d'usure de chacun des actionneurs, une définition 75 des limites de fonctionnement de chacun des actionneurs, une définition 76 d'une erreur E(t) de positionnement de l'outil 10, une fonction 78 de compromis, et des valeurs 80 par défaut pour l'ensemble des coefficients et des paramètres utilisés dans le procédé de la figure 2.

Le modèle 72 permet de prédire la température de fonctionnement en régime stationnaire de chacun des actionneurs 16 à 21 en fonction des mesures réalisées lorsque l'outil 10 parcourt une seule fois la trajectoire 12.

Le modèle d'échauffement utilisé est, par exemple, défini par la relation suivante:

$$\vec{T} = \begin{bmatrix} T_1 \\ \vdots \\ T_6 \end{bmatrix} = A \begin{bmatrix} \frac{1}{t_c} \int_0^{t_c} \Gamma_1^2(t)\,dt \\ \vdots \\ \frac{1}{t_c} \int_0^{t_c} \Gamma_6^2(t)\,dt \end{bmatrix} + B \begin{bmatrix} \frac{1}{t_c} \int_0^{t_c} \dot{q}_1^2(t)\,dt \\ \vdots \\ \frac{1}{t_c} \int_0^{t_c} \dot{q}_6^2(t)\,dt \end{bmatrix} + \begin{bmatrix} \gamma_1 \\ \vdots \\ \gamma_6 \end{bmatrix} + T_{ext} \quad (1)$$

où:

- les indices 1 à 6 correspondent respectivement aux actionneurs 16 à 21,
- $T_i$ est la température de l'actionneur i,
- $\Gamma_i$ est le couple de l'actionneur i,
- $\dot{q}_1$ est la vitesse angulaire de l'arbre de sortie de l'actionneur i,
- A, B sont des matrices de dimension 6 x 6 caractéristiques des échanges thermiques dans le robot 4,
- $\gamma_i$ est une constante représentant une source de chaleur constante associée à l'actionneur i,
- $T_{ext}$ est la température ambiante de l'environnement du robot.
- $t_c$ est le temps de cycle pour parcourir la totalité de la trajectoire 12, et

- le symbole $\displaystyle "\int_0^{t_c}"$ désigne l'opération d'intégration par rapport au temps t entre 0 et $t_c$.

Ici, la valeur instantanée du couple $\Gamma_i$ est obtenue à partir de la mesure du courant $i_i$ réalisée par le capteur de courant associé à l'actionneur i.

La valeur instantanée de vitesse angulaire $\dot{q}_i(t)$ est calculée à partir des positions mesurées par le capteur de position de l'actionneur i.

Les coefficients des matrices A et B et les valeurs des $\gamma_i$ sont déterminés expérimentalement. Ici, les coefficients des matrices A et B tiennent compte des couplages thermiques entre actionneurs.

La température extérieure $T_{ext}$ est soit fixée par l'utilisateur soit mesurée.

Le modèle 74 permet de calculer le degré d'usure de chaque actionneur en fonction des vitesses angulaires $\dot{q}_i$ et des couples $\Gamma_i$.

Le degré d'usure est représentatif de la durée de vie du robot. En effet, plus le degré d'usure est important plus la durée de vie du robot est courte. Dans un robot, un élément caractéristique de l'usure est par exemple l'usure des roulements du réducteur 26. Le degré d'usure d'un actionneur peut donc être calculé, par exemple, à partir du degré d'usure des roulements des réducteurs du robot. Un tel calcul du degré d'usure est par exemple basé sur la norme internationale ISO281 : 1990.

Le modèle d'usure utilisé ici est donné par la relation suivante:

$$\vec{D} = \begin{bmatrix} D_1 \\ \vdots \\ D_6 \end{bmatrix} = \begin{pmatrix} \left( \frac{1}{t_c} \int_0^{t_c} |\Gamma_1(t)|\,dt \right)^3 \left( \frac{1}{t_c} \int_0^{t_c} |\dot{q}_1(t)|\,dt \right) \\ \vdots \\ \left( \frac{1}{t_c} \int_0^{t_c} |\Gamma_6(t)|\,dt \right)^3 \left( \frac{1}{t_c} \int_0^{t_c} |\dot{q}_6(t)|\,dt \right) \end{pmatrix} \qquad (2)$$

où $D_i$ est le degré d'usure de l'actionneur i.

Les définitions 75 définissent la plage de couple possible pour chaque actionneur i. Par exemple,les équations (3) et (4) ci-dessous définissent les limitations de couple supérieure et inférieure en fonction des vitesses de fonctionnement des actionneurs, on a pour chaque actionneur i :

$$L_{1,i} = \max_{traj}\left( \Gamma_i - a_{1,i}\,\dot{q}_i - b_{1,i} \right) \leq 0 \qquad\qquad (3)$$

$$L_{2,i} = \max_{traj}\left( a_{2,i}\,\dot{q}_i + b_{2,i} - \Gamma_i \right) \leq 0 \qquad\qquad (4)$$

où :

- $a_{1,i}$, $a_{2,i}$, $b_{1,i}$ et $b_{2,i}$ sont des constantes caractéristiques de l'actionneur déterminées expérimentalement ou données par le constructeur de l'actionneur, et
- « $\text{Max}_{traj}$ » est la fonction qui retourne la valeur instantanée maximum de l'expression entre parenthèses observée lorsque l'outil 10 a parcouru la totalité de la trajectoire 12.

Les relations (3) et (4) indiquent que le couple $\Gamma_i$ de l'actionneur i doit être compris entre deux droites fonction chacune de la vitesse angulaire $\dot{q}_i$.

La définition 76 de l'erreur de positionnement est donnée ici par la relation suivante:

$$Z = \max_{traj}\left( \left| E(t) \right| - \delta \right) \leq 0 \qquad\qquad (5)$$

où :

- $E(t)$ est l'écart instantané entre la position de l'outil 10 commandé par l'unité 38 et la position correspondante mesurée de l'outil 10,
- $|\ |$ est la fonction valeur absolue, et
- $\delta$ est un seuil prédéfini que l'écart $E(T)$ ne doit pas franchir. $\delta$ fixe donc la précision du déplacement de l'outil 10 le long de la trajectoire 12.

La fonction 78 de compromis est ici définie par la relation suivante:

$$f\left( t_c, \Gamma, \dot{q} \right) = t_c + \sum_{i=1}^{6}\left( \alpha_{1,i}e^{\frac{D_i - D_{i,Nom}}{D_{i,Nom}}} + \alpha_{2,i}e^{\frac{T_i - T_{i,Nom}}{T_{i,Nom}}} + \alpha_{3,i}e^{L_{1,i}} + \alpha_{4,i}e^{L_{2,i}} \right) + \alpha_{5,i}e^{Z} \quad (6)$$

où :

- f est la fonction de compromis,
- les $\alpha_{i,j}$ sont des coefficients réglables par l'utilisateur et dont une valeur par défaut est enregistrée dans la mémoire 52,
- $D_{i,nom}$ est la valeur limite du degré d'usure de l'actionneur i,
- $T_{i,nom}$ est la valeur limite de la température de fonctionnement de l'actionneur i, et
- « e » est la fonction exponentielle.

Les valeurs $D_{i,nom}$ et $T_{i,nom}$ sont des constantes prédéterminées. Par exemple, la valeur $D_{i,nom}$ est une constante calculée à partir des caractéristiques mécaniques des roulements des réducteurs et du nombre d'heures désirées de fonctionnement pour ces réducteurs.

La valeur $T_{i,nom}$ est, par exemple, donnée par le constructeur de l'actionneur i.

On notera qu'ici la fonction de compromis est une somme de termes. Le terme « $t_c$ » est une fonction croissante monotone qui dépend uniquement du temps de cycle. Ensuite, la fonction de compromis f comporte pour chaque actionneur i, dans l'ordre de gauche à droite:

- un premier terme qui est une fonction croissante monotone dépendant uniquement du degré d'usure $D_i$,
- un deuxième terme qui est une fonction croissante monotone dépendant uniquement de la température $T_i$,
- un troisième terme et un quatrième terme qui sont respectivement des fonctions monotones croissantes dépendant uniquement des limites de couples supérieure $L_{1,i}$ et inférieure $L_{2,i}$, et
- un cinquième terme qui est une fonction monotone croissante dépendant uniquement de l'erreur de positionnement $\varepsilon_i$.

De préférence, la somme de ces cinq derniers termes varient en sens opposé du terme « $t_c$ » lorsque le temps de cycle varie. Par exemple, la valeur de la somme de ces cinq termes augmente quand le temps de cycle diminue. En pratique, cette fonction de compromis admet un minimum.

Ici, à l'exception du terme « $t_c$ », les autres termes sont tous une fonction d'une différence entre une valeur mesurée ou calculée et une valeur limite. Ces valeurs limites n'ont pas toutes la même importance relative. Par exemple, il est beaucoup plus important de ne pas franchir les valeurs limites sur le couple instantané $\Gamma_i$ plutôt que celles imposées sur le degré d'usure ou la température. En effet, le franchissement d'une valeur limite imposée sur le couple $\Gamma_i$ peut conduire à un dysfonctionnement immédiat de l'actionneur et donc se traduire par l'impossibilité pour le robot 4 d'achever le parcours de la trajectoire 12. A l'inverse, un dépassement de la valeur $D_{i,nom}$ ou de la valeur $T_{i,nom}$ n'empêche pas le robot 4 de parcourir dans sa totalité la trajectoire 12 et ceci plusieurs fois d'affilée. La seule conséquence du dépassement des valeurs $D_{i,nom}$ et $T_{i,nom}$ est, par exemple, un raccourcissement de la durée de vie du robot 4, ce qui peut être acceptable pour l'utilisateur si ce raccourcissement de durée de vie est contrebalancé par un gain important sur le temps de cycle.

De même, ici, on considèrera que le dépassement par l'erreur E(t) du seuil $\delta$ doit absolument être évité.

Dans ces conditions, les valeurs des coefficients $\alpha_{j,i}$ devraient être choisies en respectant les relations suivantes:

- $\alpha_{1,i} = \alpha_{2,i}$ strictement inférieure à $\alpha_{3,i}$, $\alpha_{4,i}$ et $\alpha_{5,i}$
- $\alpha_{3,i} = \alpha_{4,i} = \alpha_{5,i}$.

Le fonctionnement du dispositif 2 va maintenant être décrit en regard de la figure 2 dans le cas particulier où l'on cherche à minimiser le temps de cycle $t_c$.

Initialement, lors d'une étape 98, le module 60 acquiert par l'intermédiaire de l'interface homme/machine 54 des valeurs saisies par l'utilisateur pour les coefficients $\alpha_{i,j}$. Si l'utilisateur ne souhaite pas procéder à l'étape 98, alors les valeurs par défaut 80 sont utilisées.

Ensuite, lors d'une étape 100, le vecteur $\vec{P}$ de paramètres de fonctionnement est initialisé. Les coordonnées $p_i$ de ce vecteur $\vec{P}$ sont, par exemple, initialisées à partir des valeurs limites données par le constructeur de chaque actionneur pour l'accélération maximale, la vitesse maximale et la décélération maximale.

Ensuite, lors d'une étape 102, l'unité 50 envoie les paramètres de fonctionnement $p_i$ à l'unité de commande 38.

En réponse, lors d'une étape 104, le générateur 40 calcule la trajectoire respectant les paramètres de fonctionnement reçus sur chacune des portions de la trajectoire 12. A cet effet, le générateur 40 utilise les coordonnées des points de passage enregistrés dans la mémoire 42 et les valeurs reçues pour les paramètres $p_i$ pour établir le profil de vitesse de l'outil 10 le long de chaque portion de la trajectoire 12.

Une fois ces profils de vitesse établis, lors d'une étape 106, l'unité 38 commande chaque actionneur 16 à 21 pour que l'outil 10 se déplace le long de la trajectoire 12 conformément aux profils de vitesse établis. Ainsi, lors de l'étape 106, le robot 4 déplace l'outil 10 le long de la trajectoire 12.

En parallèle à l'étape 106, lors d'une étape 108, le courant d'alimentation $i_i$ et les positions angulaires $q_i$ de l'arbre de sortie de chaque actionneur sont mesurés. Les valeurs mesurées et les instants correspondants sont enregistrés dans la mémoire.

Une fois que l'outil 10 a parcouru la totalité de la trajectoire 12 dans un sens puis dans l'autre de manière à revenir au point de départ, lors d'une étape 110, le module 62 détermine le temps de cycle, les températures $T_i$ et les degrés d'usure $D_i$ à partir des données mesurées et enregistrées dans la mémoire 42.

Par exemple, lors de l'étape 110, le module 62 détermine le temps de cycle $t_c$ par différence entre l'instant correspondant au départ de l'outil 10 du point A et l'instant correspondant à son retour sur le point A.

Le temps de cycle inclus donc le temps mis par l'outil 10 pour parcourir la trajectoire 12 du point A jusqu'au point D puis ensuite pour revenir du point D jusqu'au point A en passant par les points C et B.

La vitesse angulaire $\dot{q}_i$ est calculée à partir de la position mesuré par les capteurs lors de l'étape 108.

Le module 62 détermine également la température $T_i$ à l'aide du modèle d'échauffement 72 enregistré dans la mémoire 52. Pour cela, la valeur du couple instantané $\Gamma_i$ est déduite de la valeur du courant instantané $i_i$ mesuré lors

de l'étape 108.

Toujours, lors de l'étape 110, le module 62 détermine les valeurs des degrés d'usure $D_i$ à partir du modèle d'usure 74.

L'écart E(t) est calculé par le module 62 à partir des positions angulaires mesurées lors de l'étape 108 et des coordonnées des points de passage enregistrées dans la mémoire 42.

Une fois les températures $T_i$, les degrés d'usure $D_i$, les couples instantanés $\Gamma_i$, les vitesses angulaires $\dot{q}_i$, l'écart E(t) et le temps de cycle $t_c$ calculés, lors d'une étape 112, l'unité 50 calcule la valeur de la fonction de compromis f.

Ensuite, lors d'une étape 114, l'unité 50 vérifie si la fonction de compromis f satisfait un critère d'arrêt prédéterminé. Par exemple, l'unité 50 vérifie que la fonction de compromis est très proche d'un extremum et plus précisément dans le cas particulier décrit ici d'un minimum.

A cet effet, lors d'une opération 116, le gradient $\nabla f$ de la fonction de compromis est calculé puis comparé, lors d'une opération 118 à un seuil prédéterminé $\varepsilon$.

A titre d'exemple, le gradient $\nabla_f$ est calculé à l'aide de la relation suivante:

$$\nabla f = \left[ \frac{f(p_1+h, p_2,...,p_n)-f(p_1,p_2,...,p_n)}{h}, \frac{f(p_1, p_2+h,...,p_n)-f(p_1,p_2,...,p_n)}{h}, \right.$$
$$\left. ..., \frac{f(p_1, p_2,...,p_n+h)-f(p_1,p_2,...,p_n)}{h} \right]^T \qquad (10)$$

où:

- n est égal à 9,
- les $p_i$ sont les paramètres de fonctionnement, et
- h est le pas choisi pour calculer le gradient.

Pour calculer le terme $f(p_1,p_2...,p_i+h, .. .p_n)$, lors d'une sous-opération 120, la valeur du paramètre $p_i$ est incrémentée du pas h, puis lors d'une sous-opération 122, le vecteur $\vec{P}$ suivant est envoyé à l'unité 38 de commande : $\vec{P} = [p_1, p_2,...,p_i+h,...p_n]^T$.

Ensuite, il est procédé aux sous-opérations 124 à 132. Ces sous-opérations 124 à 132 sont respectivement identiques aux étapes 102 à 112 à l'exception du fait que le paramètre de fonctionnement $p_i$ est remplacé par le paramètre de fonctionnement $p_i+h$.

Les sous-opérations 120 à 132 sont réitérées pour chaque paramètre $p_i$ de manière à calculer chacun des termes $f(p_1,..., p_i+h, ..., p_n)$. Le terme $f(p_1,p_2,...,p_n)$ a été calculé lors de l'étape 112.

Une fois que chaque terme $f(p_1,...,p_i+h,...,p_n)$ a été calculé, lors d'une sous-opération 134, le grandient $\nabla_f$ est calculé.

Lors de l'opération 118, le gradient $\nabla_f$ est comparé au seuil $\varepsilon$. Si le gradient est supérieur au seuil $\varepsilon$, alors le module 64 modifie automatiquement, lors d'une étape 140 les valeurs des paramètres $p_i$ pour se rapprocher du minimum de la fonction de compromis. Par exemple, lors de l'étape 140, le module 64 utilise une descente de gradient associée à une recherche linéaire. Plus précisément, lors de l'étape 140, le module 64 calcule un pas $\sigma$ de descente optimale à l'aide d'une recherche linéaire. L'algorithme de recherche linéaire sera par exemple celui de Goldstein et Price. Cet algorithme de recherche linéaire est décrit dans la référence bibliographique suivante:

« Numerical Optimization : Theoritical and Practical Aspects », J. Frédéric Bonnans, J. Charles Gilbert, Claude Lemaréchal et Claudia A. Sagastizabal, Ed. Springer.

Chaque paramètre $p_i$ est alors modifié lors de l'étape 140 à l'aide de la relation suivante:

$$p_{i,k+1} \leftarrow p_{ik} - \sigma \nabla f \qquad (11)$$

où:

- $p_{ik}$ et $p_{i,k+1}$ représentent respectivement la valeur du paramètre $p_i$ avant et après l'étape 140.

A l'issue de l'étape 140, le procédé retourne à l'étape 102.

Si la valeur du gradient $\nabla_f$ est inférieure au seuil $\varepsilon$, alors l'unité 50 procède à une étape 142 lors de laquelle des étapes 102 à 140 sont arrêtées et les valeurs actuelles des paramètres de fonctionnement sont enregistrées.

Lors d'une étape 144, les paramètres de fonctionnement enregistrés lors de l'étape 142 sont utilisés par l'unité 38 pour commander les déplacements du bras 6.

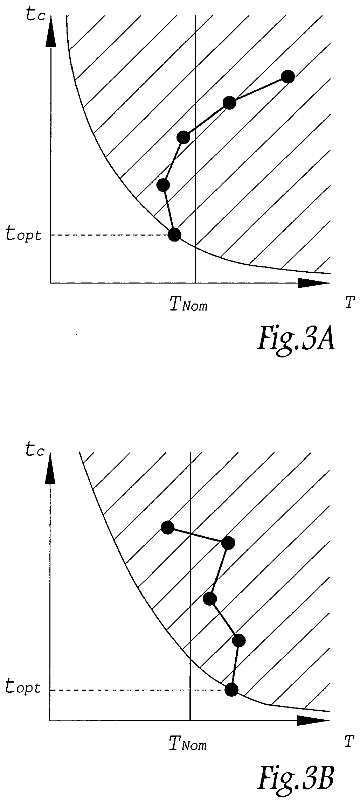

Les figures 3A et 3B représentent différents points illustrant le chemin parcouru par le procédé de la figure 2 pour arriver au temps de cycle optimal. Les zones hachurées des figures 3A et 3B représentent les ensembles de temps de cycles et températures atteignables par le système lorsque les paramètres de fonctionnement $p_i$ varient. Sur ces graphes, la valeur limite de la température T est notée $T_{nom}$ et la valeur optimale du temps de cycle obtenue à l'aide du procédé de la figure 2 est noté $t_{opt}$.

La figure 3A représente une situation dans laquelle l'augmentation de la température de fonctionnement de l'actionneur ne conduit pas à une amélioration sensible du temps de cycle $t_c$ de sorte que le temps de cycle optimal obtenu à l'issue du procédé de la figure 2 est obtenu pour une température strictement inférieure à sa valeur limite $T_{nom}$.

A l'inverse, la figure 3B représente les mêmes grandeurs physiques mais dans le cas où un léger dépassement de la valeur limite $T_{nom}$ conduit à une amélioration sensible du temps de cycle. Dans ces conditions, la valeur optimale $t_{opt}$ pour le temps de cycle est obtenue pour une température de fonctionnement strictement supérieure à sa valeur limite $T_{nom}$.

De nombreux autres modes de réalisation du dispositif 2 sont possibles. En particulier, il existe de nombreuses variantes possibles de la fonction de compromis. La fonction de compromis a été décrite ici dans le cas particulier où celle-ci est formée d'une somme de termes. En variante, la fonction de compromis peut être formée par toute fonction croissante des termes ayant un effet néfaste sur le temps de cycle. Par exemple, la fonction $\left(\sum\limits_{i=1}^{6}\right)$ peut être remplacée par une fonction retournant le maximum de ces termes.

Le terme $t_c$ de la relation (6) peut être remplacé par le terme suivant :

$$\beta e^{\frac{(t_c - t_{c,nom})}{t_{c,nom}}}$$

où :

- $\beta$ est un coefficient de pondération choisi par l'utilisateur, et
- $t_{c,nom}$ est le temps de cycle optimal que l'on souhaite atteindre.

En variante, soit le terme qui est fonction du degré d'usure $D_i$ soit le terme qui est fonction de la température $T_i$ est omis si le degré d'usure ou la température de fonctionnement de l'actionneur n'est pas à prendre en compte pour l'obtention d'un temps de cycle optimal.

Si l'erreur de positionnement n'a pas d'importance, le terme fonction de l'écart E(t) peut être omis.

D'autres termes supplémentaires peuvent être ajoutés à la fonction de compromis dans la mesure où elle est croissante en fonction de ces termes, et que ces termes ont une valeur d'autant plus grande qu'ils reflètent un effet indésirable. Par exemple, on peut ajouter un terme qui représente l'erreur de positionnement de l'outil 10 par rapport à un point de passage de la trajectoire 12, ou encore une puissance maximale consommée par un ou plusieurs actionneurs.

L'arrêt des itérations des étapes 102 à 140 peut être également déclenché manuellement par l'utilisateur lorsque celui-ci est satisfait du résultat atteint.

D'autres critères d'arrêt de l'itération des étapes 102 à 140 peuvent être utilisés. Par exemple, l'itération de ces étapes est arrêtée si la différence entre la valeur de la fonction de compromis lors de l'itération précédente et la valeur de la fonction de compromis lors de l'itération actuelle est inférieure à un seuil prédéterminé. L'arrêt des itérations peut également être déclenché si le nombre d'itérations dépasse un seuil prédéfini.

Dans un mode simplifié de réalisation, le modèle d'échauffement ne tient pas compte du couplage thermique entre les différents actionneurs du robot 4. La méthode de calcul des températures $T_i$ décrite dans WO 02/074501 peut alors être appliquée.

La plage de fonctionnement de chaque actionneur peut être définie à partir d'autres grandeurs que le couple instantané $\Gamma_i$. Par exemple ceci peut être défini par une intensité maximale consommée par l'actionneur, une vitesse angulaire maximale ou tout autre paramètre donné par le constructeur de l'actionneur.

En variante, le dispositif 2 n'est pas associé au robot 4 mais à un émulateur du robot 4. Cet émulateur doit être propre à générer la trajectoire suivie par l'outil 10 et les valeurs nécessaires pour la mise en oeuvre du dispositif 2. Par exemple, l'émulateur génère la valeur instantanée des positions angulaires des arbres de sortie des actionneurs ainsi que la valeur de l'intensité consommée par chaque actionneur.

Les températures $T_i$ peuvent être mesurés plutôt que estimés à partir des relations (1) et (2).

## Revendications

**1.** Procédé de réglage de paramètres de fonctionnement d'un robot pour déplacer un outil effecteur le long d'une trajectoire donnée en un temps de cycle optimal, ces paramètres de fonctionnement déterminant au moins la vitesse de déplacement de l'outil le long de la trajectoire donnée, ce procédé comportant à partir de mesures réalisées lors d'un déplacement réel de l'outil effecteur et/ou à partir de relevés délivrés par un émulateur de déplacement du robot :

a) une étape (110) de détermination de la valeur du temps de cycle en fonction des valeurs des paramètres de fonctionnement,
b) une étape (110) de détermination de la valeur d'une température de fonctionnement et/ou de la valeur d'un degré d'usure pour au moins l'un des actionneurs du robot suite au parcours complet de la trajectoire, et
c) une étape (140) de modification des valeurs des paramètres de fonctionnement pour rapprocher le temps de cycle de sa valeur optimale,

**caractérisé en ce que** lors de l'étape c) les valeurs des paramètres de fonctionnement sont modifiées pour se rapprocher d'un extremum d'une fonction de compromis, la fonction de compromis comprenant au moins des premier et second termes, le premier terme étant fonction du temps de cycle déterminé lors de l'étape a) et le second terme étant fonction de la température et/ou du degré d'usure déterminé lors de l'étape b), et **en ce que** le premier terme varie en sens opposé du second terme ou de la somme des autres termes lorsque le temps de cycle varie.

**2.** Procédé selon la revendication 1, **caractérisé en ce que** la fonction de compromis comporte également un troisième terme fonction du couple instantané exercé par chaque actionneur.

**3.** Procédé selon l'une quelconque des revendications précédentes, **caractérisé en ce que** la fonction de compromis comporte également un quatrième terme fonction de l'erreur de positionnement de l'outil effecteur par rapport à la trajectoire donnée.

**4.** Procédé selon l'une quelconque des revendications précédentes, **caractérisé en ce qu'**au moins l'un des termes comporte un coefficient réglable, et **en ce que** le procédé comporte une étape (98) de réglage de la valeur de ce coefficient par un utilisateur.

**5.** Procédé selon l'une quelconque des revendications précédentes, **caractérisé en ce qu'**au moins l'un des termes est fonction de la différence entre les valeurs déterminées lors de l'étape a) ou b) et d'une valeur limite donnée pour cette valeur.

**6.** Procédé selon l'une quelconque des revendications précédentes, **caractérisé en ce que** lors de l'étape b) le couplage thermique entre plusieurs actionneurs est pris en compte pour déterminer la température de fonctionnement d'au moins l'un de ces actionneurs.

**7.** Procédé selon l'une quelconque des revendications précédentes, **caractérisé en ce que** lors de l'étape b) une prédiction de la température et/ou du degré d'usure en régime stationnaire est établie à partir de données obtenues suite à un seul parcours de la trajectoire donnée, et **en ce que** la prédiction de la température et/ou du degré d'usure est utilisée pour modifier les valeurs des paramètres de fonctionnement lors de l'étape c).

**8.** Procédé selon l'une quelconque des revendications précédentes, **caractérisé en ce qu'**il comporte une étape (114) de vérification automatique que la fonction de compromis satisfait à un critère d'arrêt prédéterminé, et dans le cas où la fonction de compromis satisfait ce critère d'arrêt, une étape d'arrêt automatique de l'itération des étapes a) à c).

**9.** Procédé selon la revendication 8, **caractérisé en ce que** l'étape de vérification consiste à vérifier que la norme du gradient de la fonction de compromis par rapport aux paramètres de fonctionnement est inférieure à un seuil prédéterminé.

10. Programme d'ordinateur, **caractérisé en ce qu'**il comporte des instructions pour la mise en oeuvre d'un procédé conforme à l'une quelconque des revendications précédentes, lorsque ces instructions sont exécutées par un calculateur électronique.

11. Support d'enregistrement d'informations, **caractérisé en ce qu'**il comporte des instructions pour la mise en oeuvre d'un procédé conforme à l'une quelconque des revendications 1 à 9, lorsque ces instructions sont exécutées par un calculateur électronique.

12. Dispositif de réglage des paramètres de fonctionnement d'un robot pour déplacer un outil effecteur le long d'une trajectoire donnée en un temps de cycle optimal, ces paramètres de fonctionnement déterminant au moins la vitesse de déplacement de l'effecteur le long de la trajectoire donnée, ce dispositif comportant à partir de mesures réalisées lors d'un déplacement réel de l'outil effecteur et/ou à partir de relevés délivrés par un émulateur de déplacement du robot :

a) un module (62) de détermination de la valeur du temps de cycle en fonction de la valeur des paramètres de fonctionnement, et de détermination de la valeur de température de fonctionnement et/ou de la valeur d'un degré d'usure pour au moins l'un des actionneurs du robot suite au parcours complet de la trajectoire, et
b) un module (64) de modification des valeurs des paramètres de fonctionnement pour rapprocher le temps de cycle de sa valeur optimale,

**caractérisé en ce que** le module de modification est apte à modifier les valeurs des paramètres de fonctionnement pour se rapprocher d'un extremum d'une fonction de compromis, la fonction de compromis comprenant au moins des premier et second termes, le premier terme étant fonction du temps de cycle et le second terme étant fonction de la température et/ou du degré d'usure déterminé par le module a), le premier terme variant en sens opposé du second terme ou de la somme des autres termes lorsque le temps de cycle varie.

13. Dispositif selon la revendication 12, **caractérisé en ce qu'**au moins l'un des termes comporte un coefficient réglable et **en ce que** le dispositif comporte une interface homme/machine (54) permettant à un utilisateur de régler la valeur de ce ou ces coefficients.

**Patentansprüche**

1. Verfahren zum Einstellen von Funktionsparametern eines Roboters zum Bewegen eines Effektorwerkzeugs entlang einer vorgegebenen Bahn in einer optimalen Taktzeit, wobei diese Funktionsparameter mindestens die Geschwindigkeit der Bewegung des Werkzeugs entlang der vorgegebenen Bahn bestimmen, wobei das Verfahren aus den während einer realen Bewegung des Effektorwerkzeugs durchgeführten Messungen und/oder aus Aufzeichnungen, die von einem Bewegungsemulator des Roboters geliefert werden, aufweist:

a) einen Schritt (110) der Bestimmung des Wertes der Taktzeit abhängig von den Werten der Funktionsparameter,
b) einen Schritt (110) der Bestimmung des Wertes einer Funktionstemperatur und/oder des Wertes eines Verschleißgrades für mindestens einen der Aktoren des Roboters im Anschluss an das vollständige Durchlaufen der Bahn und
c) einen Schritt (140) der Modifikation der Werte der Funktionsparameter, um die Taktzeit an ihren Optimalwert anzunähern, **dadurch gekennzeichnet, dass** bei dem Schritt c) die Werte der Funktionsparameter modifiziert werden, um sich an ein Extremum einer Kompromissfunktion anzunähern, wobei die Kompromissfunktion mindestens einen ersten und einen zweiten Term umfasst, wobei der erste Term eine Funktion der Taktzeit ist, die in dem Schritt a) bestimmt wird, und der zweite Term eine Funktion der Temperatur und/oder des Verschleißgrades ist, die bei dem Schritt b) bestimmt werden, und dass der erste Term entgegengesetzt zu dem zweiten Term oder der Summe der anderen Terme variiert, wenn die Taktzeit variiert.

2. Verfahren nach Anspruch 1, **dadurch gekennzeichnet, dass** die Kompromissfunktion auch einen dritten Term als Funktion des momentanen Drehmoments, das von jedem Aktor ausgeübt wird, aufweist.

3. Verfahren nach einem beliebigen der vorhergehenden Ansprüche, **dadurch gekennzeichnet, dass** die Kompromissfunktion gleichfalls einen vierten Term als Funktion des Positionsfehlers des Effektorwerkzeugs in Bezug auf die gegebene Bahn aufweist.

**4.** Verfahren nach einem beliebigen der vorhergehenden Ansprüche, **dadurch gekennzeichnet, dass** mindestens einer der Terme einen einstellbaren Koeffizienten aufweist und dass das Verfahren einen Schritt (98) des Einstellens des Wertes dieses Koeffizienten durch eine Bedienperson aufweist.

**5.** Verfahren nach einem beliebigen der vorhergehenden Ansprüche, **dadurch gekennzeichnet, dass** mindestens einer der Terme eine Funktion der Differenz zwischen den bei dem Schritt a) oder b) bestimmten Werten und eines für diesen Wert gegebenen Grenzwerts ist.

**6.** Verfahren nach einem beliebigen der vorhergehenden Ansprüche, **dadurch gekennzeichnet, dass** bei dem Schritt b) die thermische Kopplung zwischen mehreren Aktoren berücksichtigt wird, um die Funktionstemperatur von mindestens einem dieser Aktoren zu bestimmen.

**7.** Verfahren nach einem beliebigen der vorhergehenden Ansprüche, **dadurch gekennzeichnet, dass** bei dem Schritt b) eine Voraussage der Temperatur und/oder des Verschleißgrades im stationären Zustand aus den Daten, die infolge eines einzigen Durchlaufens der gegebenen Bahn erhalten werden, aufgestellt wird und dass die Voraussage der Temperatur und/oder des Verschleißgrades verwendet wird, um die Werte der Funktionsparameter bei dem Schritt c) zu modifizieren.

**8.** Verfahren nach einem beliebigen der vorhergehenden Ansprüche, **dadurch gekennzeichnet, dass** es einen Schritt (114) der automatischen Überprüfung, dass die Kompromissfunktion einem vorbestimmten Anhaltekriterium genügt, und in dem Fall, in dem die Kompromissfunktion diesem Anhaltekriterium genügt, einen automatischen Anhalteschritt der Iteration der Schritte a) bis c) aufweist.

**9.** Verfahren nach Anspruch 8, **dadurch gekennzeichnet, dass** der Schritt der Überwachung darin besteht, zu verifizieren, dass der Betrag des Gradienten der Kompromissfunktion in Bezug auf die Funktionsparameter kleiner als eine vorbestimmte Schwelle ist.

**10.** Rechnerprogramm, **dadurch gekennzeichnet, dass** es Anweisungen für die Durchführung eines Verfahrens entsprechend einem beliebigen der vorhergehenden Ansprüche aufweist, wenn diese Anweisungen von einem elektronischen Rechner ausgeführt werden.

**11.** Aufzeichnungsträger für Informationen, **dadurch gekennzeichnet, dass** er Anweisungen für die Durchführung eines Verfahrens nach einem beliebigen der Ansprüche 1 bis 9 aufweist, wenn diese Anweisungen von einem elektronischen Rechner ausgeführt werden.

**12.** Vorrichtung zur Einstellung von Funktionsparametern eines Roboters zum Bewegen eines Effektorwerkzeugs entlang einer vorgegebenen Bahn in einer optimalen Taktzeit, wobei diese Funktionsparameter mindestens die Geschwindigkeit der Bewegung des Werkzeugs entlang der vorgegebenen Bahn bestimmen, wobei die Vorrichtung aus den während einer realen Bewegung des Effektorwerkzeugs durchgeführten Messungen und/oder aus Aufzeichnungen, die von einem Bewegungsemulator des Roboters geliefert werden, aufweist:

a) ein Modul (62) zur Bestimmung des Wertes der Taktzeit abhängig von den Werten der Funktionsparameter und zur Bestimmung des Wertes einer Funktionstemperatur und/oder des Wertes eines Verschleißgrades für mindestens einen der Aktoren des Roboters im Anschluss an das vollständige Durchlaufen der Bahn und

b) ein Modul (64) zur Modifikation der Werte der Funktionsparameter, um die Taktzeit an ihren Optimalwert anzunähern, **dadurch gekennzeichnet, dass** das Modifikationsmodul geeignet ist, die Werte der Funktionsparameter zu modifizieren, um sich einem Extremum einer Kompromissfunktion anzunähern, wobei die Kompromissfunktion mindestens einen ersten und zweiten Term umfasst, wobei der erste Term eine Funktion der Taktzeit und der zweite Term eine Funktion der Temperatur und/oder des Verschleißgrades, der durch das Modul a) bestimmt wird, ist, wobei der erste Term entgegengesetzt zu dem zweiten Term oder der Summe der anderen Terme variiert, wenn die Taktzeit variiert.

**13.** Vorrichtung nach Anspruch 12, **dadurch gekennzeichnet, dass** mindestens einer der Terme einen einstellbaren Koeffizienten aufweist und dass die Vorrichtung eine Mensch/Maschine-Schnittstelle (54) aufweist, die einer Bedienperson ermöglicht, den Wert dieses oder dieser Koeffizienten einzustellen.

**Claims**

1. A method of adjusting the operating parameters of a robot for moving an effector tool along a given path with an optimum cycle time, the operating parameters determining at least the travel speed of the tool along the given path, the method making use of measurements taken during a real movement of the effector tool and/or on the basis of measurements delivered by a robot movement emulator, and comprising:

   a) a step (110) of determining the value of the cycle time as a function of the values of the operating parameters;
   b) a step (110) of determining the value of an operating temperature and/or the value of a degree of wear for at least one of the actuators of the robot resulting from following the complete path; and
   c) a step (140) of modifying the values of the operating parameters to move the cycle time closer to its optimum value;

   the method being **characterized in that** during step c), the values of the operating parameters are modified so as to approach an extremum of a compromise function, the compromise function comprising at least first and second terms, the first term being a function of the cycle time determined during step a), and the second term being a function of the temperature and/or the degree of wear determined during step b), and **in that** the first term varies in the opposite direction to the second term or the sum of the other terms when the cycle time varies.

2. A method according to claim 1, **characterized in that** the compromise function also includes a third term that is a function of the instantaneous torque exerted by each actuator.

3. A method according to any preceding claim, **characterized in that** the compromise function also includes a fourth term that is a function of the positioning error of the effector tool relative to the given path.

4. A method according to any preceding claim, **characterized in that** at least one of the terms includes an adjustable coefficient, and **in that** the method includes a step (98) of a user adjusting the value of said coefficient.

5. A method according to any preceding claim, **characterized in that** at least one of the terms is a function of the difference between the values determined during step a) or b) and a limit value given for said value.

6. A method according to any preceding claim, **characterized in that** during step b) the thermal coupling between a plurality of actuators is taken into account in order to determine the operating temperature of at least one of the actuators.

7. A method according to any preceding claim, **characterized in that** during step b) a prediction of the temperature and/or of the degree of wear under steady conditions is established on the basis of data obtained following a single journey along the given path, and **in that** the prediction of the temperature and/or the degree of wear is used to modify the values of the operating parameters during step c).

8. A method according to any preceding claim, **characterized in that** it includes a step (114) of automatically verifying that the compromise function satisfies a predetermined stop criterion, and in the event of the compromise function satisfying the stop criterion, a step of automatically stopping iteration of steps a) to c).

9. A method according to claim 8, **characterized in that** the verification step consists in checking whether the norm of the gradient of the compromise function relative to the operating parameters is less than a predetermined threshold.

10. A computer program, **characterized in that** it includes instructions for implementing a method in accordance with any preceding claim, when said instructions are executed by an electronic computer.

11. An information recording medium, **characterized in that** it includes instructions for implementing a method in accordance with any one of claims 1 to 9 when said instructions are executed by an electronic computer.

12. A device for adjusting the operating parameters of a robot for moving an effector tool along a given path in an optimum cycle time, the operating parameters determining at least the travel speed of the effector along the given path, the device responding to measurements performed during real movement of the effector tool and/or readings delivered by a robot movement emulator, and comprising:

a) a determination module (62) for determining the value of the cycle time as a function of the values of the operating parameters, and for determining the value of the operating temperature and/or the value of a degree of wear for at least one of the actuators of the robot as a result of traveling along the complete path; and
b) a modification module (64) for modifying the values of the operating parameters in order to cause the cycle time to approach its optimum value;

the device being **characterized in that** the modification module is suitable for modifying the values of the operating parameters so as to approach an extremum of a compromise function, the compromise function comprising at least first and second terms, the first term being a function of the cycle time and the second term being a function of the temperature and/or the degree of wear determined by the module a), the first term varying in the opposite direction to the second term or the sum of the other terms when the cycle time varies.

13. A device according to claim 12, **characterized in that** at least one of the terms includes an adjustable coefficient, and **in that** the device includes a man/machine interface (54) enabling a user to adjust the value of said coefficient(s).

*Fig.1*

*Fig.2*

Fig.3A

Fig.3B

**EP 1 852 226 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5889926 A

- WO 02074501 A